# EUROPEAN PATENT SPECIFICATION

(11) **EP 2 940 381 B1**
(45) Date of publication and mention of the grant of the patent: **28.12.2016**
(21) Application number: 14166156.1
(22) Date of filing: 28.04.2014
(51) Int. Cl.: F22B 37/02, F22D 1/00, F22D 1/12

(54) **System for fluid medium preheating**
System zum Vorwärmen flüssiger Medien
Système de préchauffage de milieu fluide

(43) Date of publication of application: 04.11.2015
(73) Proprietor: General Electric Technology GmbH, 5400 Baden (CH)
(72) Inventor: Drouvot, Paul, 68128 Village Neuf (FR); Stenstroem, Torbjoern, 5400 Baden (CH); Berg, Klara, 5200 Brugg (CH)
(74) Representative: General Electric Technology GmbH

(56) References cited:
- EP-A1- 0 561 220
- EP-A2- 0 281 151
- EP-A2- 1 059 488
- DE-C1- 19 512 466
- US-A- 3 719 172
- US-B1- 6 460 490

## Description

### BACKGROUND

### Field of Endeavor

The present disclosure relates to Combined Cycle Power Plants (CCPP), and, more particularly, to a preheating system for preheating a fluid medium to be fed into a Heat Recovery Steam Generator (HRSG) in the CCPP.

### Brief Description of the Related Art

Combined Cycle Power Plants (CCPP) generally requires preheating of a fluid medium to deliver Heat Recovery Steam Generators (HRSG) to up to or above a fixed minimum temperature required at the HRSG. Preheating of the fluid medium reduces the irreversibilities involved in steam generation in the HRSG and improves the thermodynamic efficiency of the CCPP. Among various others advantages of the preheating fluid medium, such preheating also helps avoiding corrosion caused by flue gas condensation on outer tubes surface in inside the HRSG. Such preheating of the fluid medium may be achieved with or without feedwater heating system.

For the CCPP equipped without the feedwater heating systems, the preheating is normally achieved by recirculation of fluid medium recirculation from an economizer extraction in a dedicated HRSG coil at a cold end of the HRSG. A philosophy of the mentioned state of the art concepts is to control a fixed temperature, generally, of the fluid medium entering a low pressure economizer in HRSG in the feedwater tank.

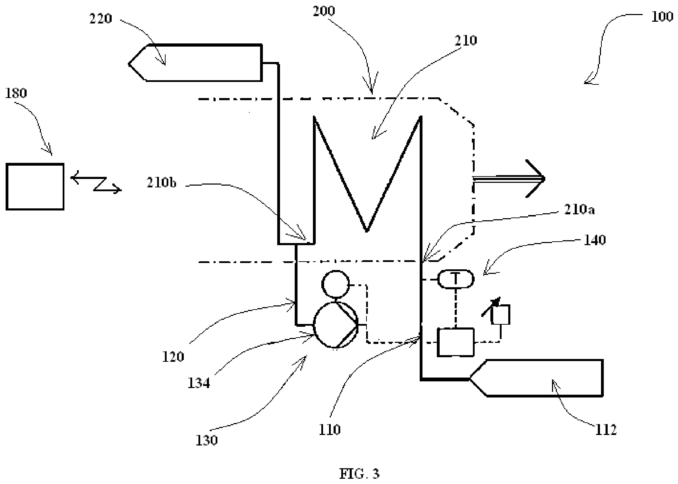

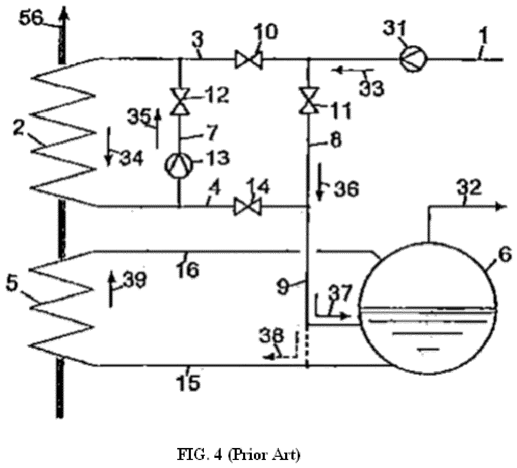

Various configurations could realize this fluid medium heating concept, such as the one described in United State Patent No. 6427636B1 (US'636). The described plant configuration is based on various control elements, as shown in FIG. 3 of US'636 (reproduced herein as Prior Art FIG. 4), incorporated in the fluid medium heating arrangement, such as, a first control element incorporated between the feed line and inlet line (10); a second control element incorporated between on the bypass line (11); and a third control element arranged on the recirculation line (12). US'636 also include several other process variant with additional control elements. Such various control elements throttles the flow to adjust the recirculation mass flow and therefore adjust the heat input to the fluid medium to maintain required temperature.

A further pre-heating system in an HRSG of a CCPP is known from EP-A2-1059488.

However, using such various control units and such regularized recirculation may constantly affect the CCPP efficiency. Such various control unit and recirculation must be carefully optimized for maximum CCPP efficiency.

### SUMMARY

The invention is defined in the appended independent claims to which reference should now be made. Advantageous features of the invention are set forth in the dependent claims.

The present disclosure describes an improved fluid medium preheating system, that will be presented in the following simplified summary to provide a basic understanding of one or more aspects of the disclosure that are intended to overcome the discussed drawbacks, but to include all advantages thereof, along with providing some additional advantages.

An object of the present disclosure is to describe an improved fluid medium preheating system, which may enable preheating of the fluid medium with reduced control units and to maximize efficiency of a Combined Cycle Power Plants (CCPP). Such improved preheating systems may equally be capable of preventing corrosion caused by flue gas condensation on outer tubes surface in inside the HRSG. Further, object of the present disclosure is to describe an improved preheating system, which may be convenient to use in an effective and economical way. Various other objects and features of the present disclosure will be apparent from the following detailed description and claims.

The above noted and other objects, in one aspect, may be achieved by an improved preheating system for preheating fluid medium to be fed into a Heat Recovery Steam Generator (HRSG) is provided. The preheating system includes a feed line and a recirculation line. The feed line is adapted to feed the fluid medium to a Low Pressure Economizer (LPE) of the HRSG. The feed line is adapted to be adjoined to an inlet of the LPE, and an outlet of the LPE enables therefrom the flow of the fluid medium in the HRSG. The recirculation line is adapted to be connected between the outlet and the inlet of the LPE and being arranged parallel to LPE to recirculate the fluid medium to the LPE.

In one embodiment of the present disclosure, the fluid medium is maintained above or at a minimum set temperature, defined during the design based on the sulphur / water content in the flue gas. In such embodiment, the preheating system may include a temperature control circuit configured to the feed line and the recirculation line to send signals to actuate and de-actuate the recirculation of the fluid medium based on the temperature of the fluid medium at the inlet of the LPE in order to maintain the minimum set temperature of the fluid medium to enter in the LPE.

In further embodiment of the present disclosure, instead of defining the minimum set temperature during the design, as in the above embodiment, the fluid medium is maintained at a temperature, a required minimum or above set temperature, as required by the HRSG during operation. As per this embodiment, a measurement element circuit, such as, a Continuous Emission Monitoring System (CEMS) circuit or any other measuring device, such as dedicated water/ acid dew point measurement device, is configured to the HRSG to enable calculation of the required minimum set temperature, based on parameters of the HRSG, at which the fluid medium is required to be kept for recirculation in the HRSG.

Both embodiments of the preheating system may optionally include a bypass line equipped with a control valve element running from the feed line to the outlet of the LPE. Further in both the embodiments of the present disclosure, the preheating system may also include a control arrangement configured in the recirculation line to enable recirculation of the fluid medium via the recirculation line.

In further aspect of the present disclosure, preheating system includes a heat shift configuration configured to increase an operational pressure of steam in the evaporator to shift heat to the LPE or to the feed line to increase heat gain in the fluid medium.

Such improved preheating systems, may enable preheating of the fluid medium with reduced control units and maximize efficiency of a Combined Cycle Power Plants (CCPP). Such improved preheating systems may equally be capable in preventing corrosion caused by flue gas condensation on outer tubes surface in inside the HRSG. Further, such improved preheating system may be convenient to use in an effective and economical way.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will be better understood with reference to the following detailed description and claims taken in conjunction with the accompanying drawing, wherein like elements are identified with like symbols, and in which:
FIG. 1 illustrates an example line diagram of a preheating system, in accordance with first exemplary embodiment of the present disclosure;
FIG. 2 illustrates an example line diagram of a preheating system, in accordance with second exemplary embodiment of the present disclosure;
FIG. 3 illustrates an example line diagram of a preheating system, in accordance with third exemplary embodiment of the present disclosure; and
FIG. 4 illustrates prior art knowledge as known in 6427636B1.
Like reference numerals refer to like parts throughout the description of several views of the drawings.

### DETAILED DESCRIPTION OF THE PRESENT DISCLOSURE

For a thorough understanding of the present disclosure, reference is to be made to the following detailed description, including the appended claims, in connection with the above described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and apparatuses are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

The terms "a" and "an" herein do not denote a limitation of quantity, but rather denote the presence of at least one of the referenced item.

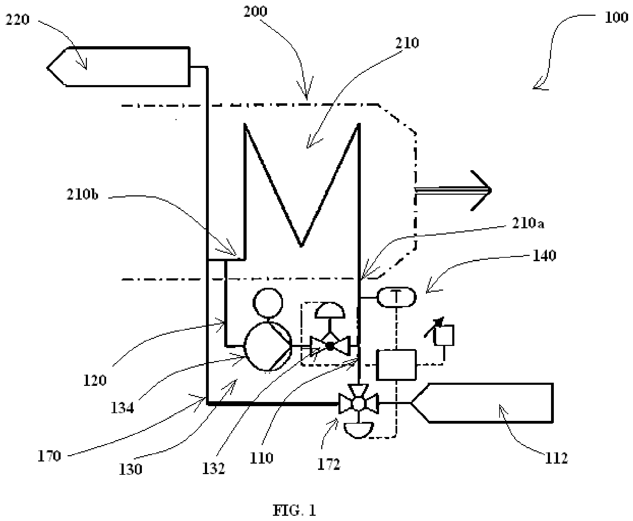

Referring now to FIGS. 1 to 3, various examples of preheating systems 100 are illustrated in accordance with various exemplary embodiments of the present disclosure. In as much as the construction and arrangement of the preheating system 100 and its arrangement with respect a Heat Recovery Steam Generator (HRSG) 200 to maximize efficiency of a Combined Cycle Power Plants (CCPP), various associated elements may be well-known to those skilled in the art, it is not deemed necessary for purposes of acquiring an understanding of the present disclosure that there be recited herein all of the constructional details and explanation thereof. Rather, it is deemed sufficient to simply note that as shown in FIGS. 1 to 3, the preheating systems 100, only those components are shown that are relevant for the description of various embodiments of the present disclosure.

As shown in FIG. 1, according to first aspect the present disclosure, the preheating system 100 for preheating fluid medium to be fed into the HRSG 200 includes a feed line 110 and a recirculation line 120. The feed line 110 is adapted to feed the fluid medium to a Low Pressure Economizer (LPE) 210 of the HRSG 200 from a main condensate source 112. The feed line 110 is adapted to be adjoined to an inlet 210a of the LPE 210. Further, an outlet 210b of the LPE 210 enables therefrom the flow of the fluid medium in further portion of the HRSG 200. The recirculation line 120 is adapted to be connected between the outlet 210a and the inlet 210b of the LPE 210, in parallel to LPE 210 to recirculate the fluid medium to the LPE 210.

Further, the preheating system 100 may include a control arrangement 130 to enable recirculation of the fluid medium. As shown in FIG. 1, the control arrangement 130 is configured in the recirculation line 120 to enable recirculation of the fluid medium via the recirculation line 120. In one embodiment, the control arrangement 130 may be at least one of a control valve 132 or a pump 134 or both, configured in the recirculation line 120. For example, as shown in FIG. 1, the control valve 132 and the pump 134 (specifically a constant volume pump) both are configured, whereas in FIG. 3, only pump 134 (specifically a variable speed pump) is configured. As compared to the prior art preheating system, shown in FIG. 4, the plant configuration is based on various control elements, such as, elements 10, 11 and 12; however, the preheating system 100 of the present embodiment precludes various such control elements and simplify the system with one control arrangement 130 to reduce component loss while fluid medium preheating and increasing efficiency of the preheating system 100. The control arrangement 130 is fully redundant to recirculate the fluid medium to reduce heat loss while recirculation, as against the prior art preheating system that recirculate fluid medium utilizing various control elements and complex recirculation circuits that affects the efficiency thereof.

In one embodiment of the present disclosure as shown in FIG. 1, the preheating of the fluid medium is maintained at minimum or above a set temperature, defined during the design based on the sulphur / water content in the flue gas of the CCPP. In this embodiment, preclusion of various control elements from the recirculation circuit 120 and providing only one control arrangement 130, makes the preheating system 100 fully redundant to recirculate the fluid medium such that that reduces heat loss while fluid medium recirculation and maintain the minimum set temperature of the fluid medium, as set during designing. For proper maintaining the minimum or above a set temperature, the preheating system 100 includes a temperature control circuit 140 configured to the feed line 110 and the recirculation line 120. The temperature control circuit 140 is configured to send signals to actuate and de-actuate the recirculation line 120 via the control arrangement 130 based on the temperature of the fluid medium at the inlet 210a of the LPE 210. Based on the actuation and de-actuation, the control arrangement 130 regulates the fluid medium in the LPE 210 in order to maintain the minimum set temperature therein.

As shown in FIG. 1, the preheating system 100 may also include a bypass line 170 equipped with a control valve element 172 running from the feed line 110 to the outlet 210b of the LPE 210. The control valve element 172 may be one of a three-way or a two-way shutoff valve. The preheating system 100 without the bypass line 170 is illustrated in FIG. 3. The bypass line 170 is equipped to bypass the fluid medium from the feed line 110 directly to an evaporator 220 of the HRSG 200 in case when the temperature of the fluid medium may not reach the minimum required temperature.

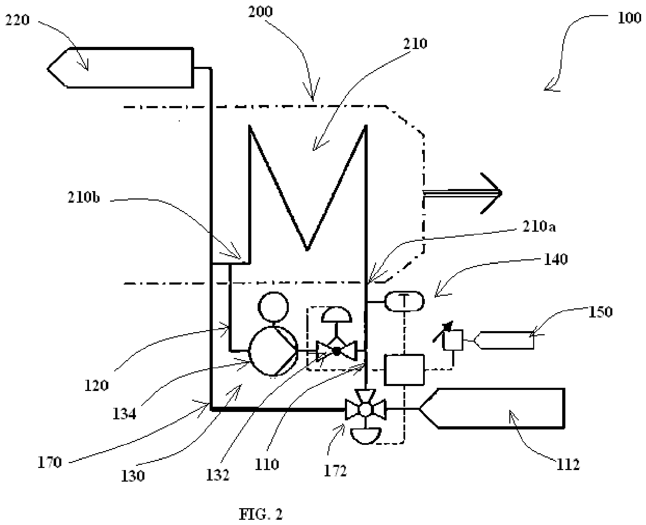

Referring now to FIG. 2, a second aspect of the present disclosure, where instead of defining the minimum set temperature during the design, as in the first aspect described with respect to FIG. 1, the fluid medium is maintained at or above a required temperature, herein after referred as "required minimum temperature," as required by the HRSG 200 during the operation. As per this aspect, shown in FIG. 2, a measurement device 150 circuit is configured to the temperature control circuit 140 and to the HRSG 200. In one embodiment, the measurement device 150 may be Continuous Emission Monitoring System (CEMS), which may be configured to the temperature control circuit 140 and the HRSG 200 to calculate the required minimum temperature for the fluid medium, based on parameters of the HRSG 200, at which the fluid medium is required to be kept for recirculation in the HRSG 200 to avoid corrosion thereof. However, without departing from the scope of the present disclosure, apart from the CEMS, any other measuring device, such as dedicated water/ acid dew point measurement device may also be used to for calculation of the required minimum temperature. Further, in this second aspect (as shown in FIG. 2), similar to the first aspect (as per FIG. 1), preclusion of various control elements from the recirculation circuit and providing only one control arrangement 130, makes the preheating system 100 fully redundant to recirculate the fluid medium such that that reduces heat loss while fluid medium recirculation and maintain the required minimum temperature of the fluid medium, as calculated by the temperature control circuit 140. Furthermore, similar to the first aspect, the bypass line 170 may be optionally equipped with the control valve element 172 running from the feed line 110 to the outlet 210b of the LPE 210.

Referring now to FIG. 3, third aspect of the fluid medium preheating system 100 is depicted. As per this aspect, the preheating system 100 includes heat shift configuration 180 configured to increase an operational pressure of steam in the evaporator 220 to shift heat to the LPE 210 or to the feed line 110 to increase heat gain in the fluid medium. In an exemplary embodiment, a steam turbine control valve that is equipped in a typical arrangement of the steam turbine may be used for the said purpose. The steam turbine control valve may throttle the steam flow that results in the higher pressure in the LPE 210 and therefore the heat is shifted to the LPE 210. Since the heat required for preheating the fluid medium is gained by shifting the heat, a need of LPE 210 bypass line 170 may be eliminated, which may be required in above embodiments as depicted in FIGS. 1 and 2, thereby increasing the efficiency of the HRSG 200. Such arrangement may be a case when the gas turbine is fuel oil.

The preheating system 100 as shown in FIG. 3 may also include, similar to above embodiments, the temperature control circuit 140 configured to the heat shift configuration 180, particularly to the steam turbine control valve, to send signals to throttle the steam turbine control valve to increase or decrease the operational pressure based on the temperature of the fluid medium.

The invention of the present disclosure is advantageous in various scopes. Such improved preheating systems may enable preheating of the fluid medium with reduced control units and to maximize efficiency of a Combined Cycle Power Plants (CCPP). Such improved preheating systems may equally be capable in preventing corrosion caused by flue gas condensation on outer tubes surface in inside the HRSG. Further, the improved preheating systems may be convenient to use in an effective and economical way. Various other advantages and features of the present disclosure are apparent from the above detailed description and appendage claims.

Various modifications to the embodiments described are possible and will occur to those skilled in the art without departing from the invention which is defined by the following claims.

Reference Numeral List
- 100: Preheating system
- 110: Feed line
- 112: Main Condensate Source
- 200: Heat Recovery Steam Generator (HRSG)
- 210: Low Pressure Economizer (LPE)
- 210a: Inlet
- 210b: Outlet
- 220: Evaporator
- 120: Recirculation line
- 130: Control arrangement
- 132: Control valve
- 134: Variable speed pump
- 140: Temperature control circuit
- 150: Measurement element circuit
- 170: Bypass line
- 172: Control valve element
- 180: Heat shift configuration

## Claims

1. A preheating system (100) for preheating a fluid medium, comprising:
a low pressure economiser (LPE) (210) in a heat recovery steam generator (HRSG) (200), the LPE comprising an inlet (210a) and an outlet (210b),
a feed line (110) to feed the fluid medium to the LPE (210), wherein the feed line (110) is joined to the inlet (210a) of the LPE (210); and
a recirculation line (120) connected between the outlet (210b) and the inlet (210a) of the LPE (210) and arranged to recirculate the fluid medium from the outlet (210b) of the LPE (210) to the inlet (210a) of the LPE (210) **characterized in that** the preheating system comprises
a heat shift configuration (180) configured to increase an operational pressure of steam in an evaporator (220) downstream of the LPE to shift heat to the LPE (210) or to the feed line (110) to increase heat gain in the fluid medium.

2. The preheating system (100) as claimed in claim 1, wherein the heat shift configuration comprises a steam turbine control valve.

3. The preheating system (100) as claimed in claim 1 or 2, further comprising a control arrangement (130) configured in the recirculation line (120) to enable recirculation of the fluid medium via the recirculation line (120).

4. The preheating system (100) as claimed in claim 3, wherein the control arrangement (130) comprises at least one of a control valve (132) and a variable speed pump (134).

5. The preheating system (100) as claimed in claim 4, further comprising a temperature control circuit (140) configured to the feed line (110) and the recirculation line (120), to send signals to actuate and de-actuate the recirculation of the fluid medium based on the temperature of the fluid medium at the inlet (210a) of the LPE (210) in order to maintain a minimum set temperature of the fluid medium to enter in the LPE (210).

6. The preheating system (100) as claimed in claim 5, further comprising a measurement element (150) circuit configured to the temperature control circuit (140) and to the HRSG (200):
to enable calculation of the required minimum temperature at which the fluid medium is required to be kept for recirculation in the HRSG (200), based on parameters of the HRSG (200); and
to enable the temperature control circuit (140) to send signals to actuate and de-actuate the recirculation of the fluid medium based on the calculated required minimum temperature to recirculated the fluid medium from the recirculation line (120).

7. The preheating system (100) as claimed in claim 6, wherein the measurement element (150) is a Continuous Emission Monitoring System (CEMS).

8. The preheating system (100) as claimed in claim 1, further comprising a bypass line (170) equipped with a control valve element (172) running from the feed line (110) to the outlet (210b) of the LPE (210).

9. The preheating system (100) as claimed in claim 8, wherein the control valve element (172) is one of a three ways or a two ways shutoff valve.

10. The preheating system (100) as claimed in claim 1, further comprising a temperature control circuit (140) configured to send signals to increase or decrease the operational pressure based on the temperature of the fluid medium.

11. A method of operating a preheating system (100) for preheating a fluid medium, the preheating system (100) comprising a low pressure economiser (LPE) (210) in a heat recovery steam generator (HRSG) (200), the LPE comprising an inlet (210a) and an outlet (210b), the method comprising the steps of:
feeding the fluid medium through a feed line (110) to the inlet (210a) of the LPE (210) and through the LPE (210) to the outlet (210b) of the LPE (210);
recirculating the fluid medium from the outlet (210b) to the inlet (210a) of the LPE (210); the method further comprising the steps of
increasing an operational pressure of steam in an evaporator (220) downstream of the LPE to shift heat to the LPE (210) or to the feed line (110) to increase heat gain in the fluid medium.

12. The method of claim 11, comprising the step of sending signals to increase or decrease the operational pressure based on the temperature of the fluid medium.

13. The method of claim 11 or 12, wherein the fluid medium is maintained at or above a minimum set temperature.

14. The method of any one of claims 11 to 13, wherein the operational pressure is increased by throttling the steam flow through a steam turbine control valve.

## Patentansprüche

1. Vorwärmsystem (100) zum Vorwärmen eines
Fluidmediums, umfassend:
einen Niederdruck-Abgasvorwärmer (LPE) (210) in einem Wärmerückgewinnungsdampfgenerator (HRSG) (200), wobei der LPE einen Einlass (210a) und einen Auslass (210b) umfasst,
eine Zuleitung (110) zum Zuführen des Fluidmediums zum LPE (210), wobei die Zuleitung (110) mit dem Einlass (210a) des LPE (210) verbunden ist; und
eine Rückführleitung (120), die zwischen dem Auslass (210b) und dem Einlass (210a) des LPE (210) verbunden ist und zum Rückführen des Fluidmediums aus dem Auslass (210b) des LPE (210) zum Einlass (210a) des LPE (210) angeordnet ist, **dadurch gekennzeichnet, dass** das Vorwärmsystem umfasst:
eine Wärmeverschiebungskonfiguration (180), die zum Erhöhen eines Betriebsdrucks von Dampf in einem Verdampfer (220) stromabwärts des LPE zum Verschieben der Wärme zum LPE (210) oder zur Zuleitung (110) zum Erhöhen der Wärmeausbeute im Fluidmedium konfiguriert ist.

2. Vorwärmsystem (100) nach Anspruch 1, wobei die Wärmeverschiebungskonfiguration ein Dampfturbinen-Steuerventil umfasst.

3. Vorwärmsystem (100) nach Anspruch 1 oder 2, ferner umfassend eine Steuerungsanordnung (130), die in der Rückführleitung (120) zum Ermöglichen der Rückführung des Fluidmediums über die Rückführleitung (120) konfiguriert ist.

4. Vorwärmsystem (100) nach Anspruch 3, wobei die Steuerungsanordnung (130) mindestens entweder ein Steuerventil (132) oder eine Pumpe mit variabler Geschwindigkeit (134) umfasst.

5. Vorwärmsystem (100) nach Anspruch 4, ferner umfassend einen Temperaturregelkreis (140), der an der Zuleitung (110) und der Rückführleitung (120) konfiguriert ist, um Signale zum Betätigen und Deaktivieren der Rückführung des Fluidmediums basierend auf der Temperatur des Fluidmediums am Einlass (210a) des LPE (210) zum Beibehalten einer gesetzten Mindesttemperatur des Fluidmediums zum Eintreten in den LPE (210) zu senden.

6. Vorwärmsystem (100) nach Anspruch 5, ferner umfassend eine Messelementschaltung (150), die an dem Temperaturregelkreis (140) und HRSG (200) konfiguriert ist, um
die Berechnung der erforderlichen Mindesttemperatur zu ermöglichen, bei der das Fluidmedium zur Rückführung in den HRSG (200) basierend auf den Parametern der HRSG (200) gehalten werden muss; und
dem Temperaturregelkreis (140) das Senden von Signalen zum Betätigen oder Deaktivieren der Rückführung des Fluidmediums basierend auf der berechneten erforderlichen Mindesttemperatur zum Rückführen des Fluidmediums aus der Rückführleitung (120) zu ermöglichen.

7. Vorwärmsystem (100) nach Anspruch 6, wobei das Messelement (150) ein kontinuierliches Emissionsüberwachungssystem (CEMS) ist.

8. Vorwärmsystem (100) nach Anspruch 1, ferner umfassend eine Umgehungsleitung (170), die mit einem Steuerventilelement (172) ausgestattet ist, die von der Zuleitung (110) zum Auslass (210b) des LPE (210) läuft.

9. Vorwärmsystem (100) nach Anspruch 8, wobei das Steuerventilelement (172) entweder ein Dreiwege- oder ein Zweiwege-Rückschlagventil ist.

10. Vorwärmsystem (100) nach Anspruch 1, ferner umfassend einen Temperaturregelkreis (140), der zum Senden von Signalen zum Erhöhen oder Verringern des Betriebsdrucks basierend auf der Temperatur des Fluidmediums konfiguriert ist.

11. Verfahren zum Betrieb eines Vorwärmsystems (100) zum Vorwärmen eines Fluidmediums, wobei das Vorwärmsystem (100) einen Niederdruck-Abgasvorwärmer (LPE) (210) in einem Wärmerückgewinnungsdampfgenerator (HRSG) (200) umfasst, wobei der LPE einen Einlass (210a) und einen Auslass (210b) umfasst, wobei das Verfahren die folgenden Schritte umfasst:
Zuführen des Fluidmediums durch eine Zuleitung (110) zum Einlass (210a) des LPE (210) und durch den LPE (210) zum Auslass (210b) des LPE (210);
Rückführen des Fluidmediums aus dem Auslass (210b) zum Einlass (210a) des LPE (210); wobei das Verfahren ferner die folgenden Schritte umfasst:
Erhöhen eines Betriebsdrucks von Dampf in einem Verdampfer (220) stromabwärts des LPE zum Verschieben der Wärme zum LPE (210) oder zur Zuleitung (110) zum Erhöhen der Wärmeausbeute im Fluidmedium.

12. Verfahren nach Anspruch 11, umfassend den Schritt des Sendens von Signalen zum Erhöhen oder Verringern des Betriebsdrucks basierend auf der Temperatur des Fluidmediums.

13. Verfahren nach Anspruch 11 oder 12, wobei das Fluidmedium bei oder über einer gesetzten Mindesttemperatur gehalten wird.

14. Verfahren nach einem der Ansprüche 11 bis 13, wobei der Betriebsdruck durch Drosseln des Dampfflusses durch ein Dampfturbinen-Steuerventil erhöht wird.

## Revendications

1. Système de préchauffage (100) pour préchauffer un milieu fluide, comprenant:
un économiseur basse pression (LPE) (210) dans un générateur de vapeur à récupération de chaleur (HRSG) (200), le LPE présentant une entrée (210a) et une sortie (210b),
une ligne d'alimentation (110) pour amener le milieu fluide au LPE (210), dans lequel la ligne d'alimentation (110) est jointe à l'entrée (210a) du LPE (210); et
une ligne de recirculation (120) connectée entre la sortie (210b) et l'entrée (210a) du LPE (210) et agencée de manière à faire recirculer le milieu fluide à partir de la sortie (210b) du LPE (210) jusqu'à l'entrée (210a) du LPE (210),
**caractérisé en ce que** le système de préchauffage présente une configuration de déplacement de chaleur (180) configurée de manière à augmenter une pression opérationnelle de vapeur dans un évaporateur (220) en aval du LPE afin de déplacer de la chaleur vers le LPE (210) ou vers la ligne d'alimentation (100) dans le but d'augmenter le gain de chaleur dans le milieu fluide.

2. Système de préchauffage (100) selon la revendication 1, dans lequel la configuration de déplacement de chaleur comprend une soupape de commande de turbine à vapeur.

3. Système de préchauffage (100) selon la revendication 1 ou 2, comprenant en outre un agencement de commande (130) configuré dans la ligne de recirculation (120) de manière à permettre une recirculation du milieu fluide par l'intermédiaire de la ligne de recirculation (120).

4. Système de préchauffage (100) selon la revendication 3, dans lequel l'agencement de commande (130) comprend au moins une parmi une soupape de commande (132) et une pompe à vitesse variable (134).

5. Système de préchauffage (100) selon la revendication 4, comprenant en outre un circuit de commande de température (140) configuré sur la ligne d'alimentation (110) et la ligne de recirculation (120) pour envoyer des signaux destinés à activer et à désactiver la recirculation du milieu fluide sur la base de la température du milieu fluide à l'entrée (210a) du LPE (210) dans le but de maintenir une température définie minimum du milieu fluide pour entrer dans le LPE (210).

6. Système de préchauffage (100) selon la revendication 5, comprenant en outre un circuit d'élément de mesure (150) configuré sur le circuit de commande de température (140) et le HRSG (200) de manière à:
permettre le calcul de la température minimum requise à laquelle le milieu fluide doit être maintenu pour une recirculation dans le HRSG (200), sur la base de paramètres du HRSG (200); et
permettre au circuit de commande de température (140) d'envoyer des signaux pour activer et désactiver la recirculation du milieu fluide sur la base de la température minimum requise calculée afin de faire recirculer le milieu fluide à partir de la ligne de recirculation (120).

7. Système de préchauffage (100) selon la revendication 6, dans lequel l'élément de mesure (150) est un système de surveillance des émissions en continu (CEMS).

8. Système de préchauffage (100) selon la revendication 1, comprenant en outre une ligne de bipasse (170) équipée d'un élément de soupape de commande (172) qui s'étend à partir de la ligne d'alimentation (110) jusqu'à la sortie (210b) du LPE (210).

9. Système de préchauffage (100) selon la revendication 8, dans lequel l'élément de soupape de commande (172) est une soupape d'arrêt soit à trois voies, soit à deux voies.

10. Système de préchauffage (100) selon la revendication 1, comprenant en outre un circuit de commande de température (140) configuré de manière à envoyer des signaux pour augmenter ou diminuer la pression opérationnelle sur la base de la température du milieu fluide.

11. Procédé de fonctionnement d'un système de préchauffage (100) pour préchauffer un milieu fluide, le système de préchauffage (100) comprenant un économiseur basse pression (LPE) (210) dans un générateur de vapeur à récupération de chaleur (HRSG) (200), le LPE présentant une entrée (210a) et une sortie (210b), le procédé comprenant les étapes suivantes:
amener le milieu fluide à travers une ligne d'alimentation (110) à l'entrée (210a) du LPE (210) et à travers le LPE (210) jusqu'à la sortie (210b) du LPE (210) ;
faire recirculer le milieu fluide à partir de la sortie (210b) jusqu'à l'entrée (210a) du LPE (210),
le procédé comprenant en outre l'étape consistant à augmenter une pression opérationnelle de vapeur dans un évaporateur (220) en aval du LPE afin de déplacer de la chaleur vers le LPE (210) ou vers la ligne d'alimentation (110) dans le but d'augmenter le gain de chaleur dans le milieu fluide.

12. Procédé selon la revendication 11, comprenant l'étape consistant à envoyer des signaux pour augmenter ou diminuer la pression opérationnelle sur la base de la température du milieu fluide.

13. Procédé selon la revendication 11 ou 12, dans lequel le milieu fluide est maintenu à ou au-dessus d'une température définie minimum.

14. Procédé selon l'une quelconque des revendications 11 à 13, dans lequel la pression opérationnelle est accrue en étranglant l'écoulement de vapeur à travers une soupape de commande de turbine à vapeur.
